# EUROPEAN PATENT APPLICATION

(11) **EP 4 564 865 A1**
(43) Date of publication of application: **04.06.2025**
(21) Application number: 24213816.2
(22) Date of filing: 19.11.2024
(51) Int. Cl.: H04W 4/90, H04W 76/50, H04L 67/141, H04W 12/08, H04W 12/122

(54) **NETWORK SLICING FOR UNAUTHORIZED DEVICES**

(30) Priority: 30.11.2023 US 202318525751
(71) Applicant: T-Mobile USA, Inc., Bellevue, WA 98006-1350 (US)
(72) Inventor: MIGALDI, Scott Francis, Bellevue, 98006-1350 (US); GIBSON, Todd, Bellevue, 98006-1350 (US)
(74) Representative: Suddaby, Mark Edward

(57) **Abstract**

Techniques for determining a network slice for a communication session associated with user equipment (UE) are described herein. A fifth generation telecommunications network can implement a server to determine a network slice that enables an unauthorized UE to communicate with an emergency service provider. The server can determine that the UE is not associated with a mobile network operator or is otherwise untraceable, and enable a communication session between the UE and emergency service provider. The server can detect malicious activity in the network slice and perform actions to mitigate the malicious activity associated with the network slice.

## Description

### BACKGROUND

Modern terrestrial telecommunication systems include heterogeneous mixtures of second, third, and fourth generation (2G, 3G, and 4G) cellular-wireless access technologies, which can be cross-compatible and can operate collectively to provide data communication services. Global Systems for Mobile (GSM) is an example of 2G telecommunications technologies; Universal Mobile Telecommunications System (UMTS) is an example of 3G telecommunications technologies; and Long Term Evolution (LTE), including LTE Advanced, and Evolved High-Speed Packet Access (HSPA+) are examples of 4G telecommunications technologies. Telecommunications systems may include fifth generation (5G) cellular-wireless access technologies to provide improved bandwidth and decreased response times to a multitude of devices that may be connected to a network.

### BRIEF DESCRIPTION OF THE DRAWINGS

The detailed description is set forth with reference to the accompanying figures. In the figures, the left-most digit(s) of a reference number identifies the figure in which the reference number first appears. The use of the same reference numbers in different figures indicates similar or identical items or features.
FIG. 1 depicts an example network environment in which an example user equipment (UE) can connect to a telecommunications system that includes an example server to implement the techniques described herein.
FIG. 2 depicts an example system architecture for a fifth generation (5G) telecommunication network.
FIG. 3 depicts a messaging flow for establishing a communication session through an example server in an example telecommunication system.
FIG. 4 depicts another example network environment in which a user equipment can connect to a telecommunication network to implement the techniques described herein.
FIG. 5 depicts a flowchart of an example process for determining a network slice for an example user equipment.
FIG. 6 depicts an example system architecture for a user equipment.

### DETAILED DESCRIPTION

This application relates to techniques for determining a network slice for a communication session associated with user equipment (UE). The network slice techniques can include a 5G telecommunications system implementing a server that determines a network slice that enables an unauthorized UE to exchange data with an emergency service provider. For example, the server can assign a network slice for one or more unauthorized UEs to communicate with a public service access point (PSAP) associated with the emergency service provider. The server can monitor the network slice for malicious activity and mitigate instances that affect availability of the PSAP to authorized UEs and unauthorized UEs. By implementing the server to perform the functionality described herein, network slice(s) can be provided to UEs that are not associated with a mobile network operator or otherwise traceable. In this way, the techniques can improve network capacity, security, and/or quality of service associated with data exchanged between a UE and a PSAP.

Generally, the server can represent functionality to identify, generate, or otherwise determine a network slice that enables unauthorized UEs access to an emergency service provider. For example, the server of the 5G telecommunication network can assign or direct an unauthorized UE to a network slice. An unauthorized UE can include a UE that is not traceable (e.g., a device location cannot be determined) and/or identifiable (e.g., an identity of the UE cannot be determined, authorized, validated, and/or verified) for using the 5G telecommunication network. In some examples, an unauthorized UE may not have an account with a mobile network operator that authorizes the UE to exchange data with another device over a particular network.

The network slice can represent a communication channel for an unauthorized UE to place an emergency communication (e.g., voice, text, image, video, etc.) to a device associated with an emergency service provider. In some examples, the network slice can provide emergency communication services to one or more unauthorized UEs so that the telecommunications network complies with laws requiring the unauthorized UEs access to a network for connecting to an emergency service provider. In various examples, the server can monitor the network slice to preemptively identify malicious activity in the network slice. By monitoring the network slice as described herein, the server can determine an action to mitigate the malicious activity (e.g., before, during, and/or after an attack by the threat actor) to ensure that the network slice has capacity to provide the emergency communication services.

The network slice techniques described herein can be used to control which UEs (e.g., authorized and/or unauthorized) are able to establish a communication channel with a device associated with the emergency service provider. By way of example and not limitation the server can manage activity over the network slices (a first slice assigned for authorized UEs and a second slice for unauthorized UEs) and identity a coordinated attack (e.g., a denial of service attack) by multiple unauthorized UEs aimed at disrupting availability of a PSAP for answering an emergency communication. The server can, for example, determine which unauthorized UEs to remove from the network slice to minimize an impact of the coordinated attack.

In various examples, an emergency can vary by type (impact to people and/or environment), area of impact, type of emergency response required, and so on, and the techniques can be used to maintain a maximum number of available communication channels for various UEs to exchange data. For example, the emergency associated with a request for a communication channel can relate to an environmental emergency (e.g., a weather event or other impact to the environment whether natural or caused by a human), a medical emergency, an event impacting public safety, and the like. By assigning a network slice to unauthorized UEs as described herein, emergency calls of various types can reach an appropriate emergency service provider (e.g., to respond to the particular emergency type).

In some examples, the server can monitor activity from various unauthorized UEs over time to identify and mitigate potential malicious activity associated with the network slice. For example, the server can implement a security component to detect whether one or more of the unauthorized UEs assigned to or otherwise using the network slice are associated with a threat actor. The server may, for example, determine presence of a threat actor implementing a denial of service attack (or other attack type) that may cause the PSAP to be unavailable to other authorized UEs and/or unauthorized UEs. In such examples, the server can identify unauthorized UEs for removal from the network slice to cause network capacity to increase or otherwise preemptively avoid the denial of service attack. Further discussion of the server utilizing the security component can be found throughout this disclosure including in the figures below.

The network slice techniques can be used to enable emergency communications over a telecommunications network for UEs that are not identifiable, traceable, or otherwise associated with the telecommunications network (e.g., not contracted to exchange data over one or more network elements). In some examples, the server can send instructions to the UE to cause the UE to use a particular network slice to make emergency calls. In various examples, the server can receive a message from an unauthorized UE requesting to exchange data with an emergency service provider, a PSAP, or other public emergency service, and determine a network slice to serve as a communication channel for exchanging the data based on the network slice being identified for use by the message received by the UE.

The server may, for instance, represent firmware, hardware and/or software that generates, assigns, selects, or otherwise determines a network slice available for use by a UE. In some examples, the server can transmit data indicating the network slice for use by various UEs to cause the UEs to exchange data with an emergency service provider. In various examples, the server can proactively communicate network slice information to the UEs before receiving a message or request from the UE to contact the emergency service provider. For example, a base station associated with the 5G telecommunication system can send a request for network slice information to the server responsive to detecting presence of the UE, and receive network slice information for transmitting to the UE. In some examples, the server can provide the base station network slice information for sending to the UE independent of the UE explicitly requesting a network slice or initiating the message or the request.

In various examples, the UE may be configured with instructions to implement the techniques described herein. For example, the UE can be configured with the instructions to cause the UE to use a particular network slice when transmitting a message requesting to make an emergency communication to a telecommunications network. In such examples, a server, computing device, or component of the telecommunications network can send the network slice information to the UE (or manufacturer thereof) to enable the UE to use a particular network slice for emergency communications.

In some examples, the server can represent an Access and Mobility Management Function (AMF) configured to identify a device identifier (e.g., a P-Access-Network-Information (PANI), an International Mobile Equipment Identity (IMEI), or other device identifier, associated with the UE usable to identify the UE) associated with a message from a UE (e.g., a call setup request, etc.) for determining an authentication status for the UE. For example, the AMF can use the device identifier to verify whether the UE registered with a mobile network operator to receive service over a network. In various examples, the AMF can select a network slice for the UE, and connect the selected network slice with the UE to enable an exchange of data between the UE and a PSAP.

By providing network slice techniques as described herein, an example computing device (e.g., the server) can improve quality of service, latency, and other performance metrics for providing service to UEs (both authorized and unauthorized) to receive various emergency services via a telecommunications network. For example, a network slice can be used to manage a number of unauthorized UEs that can communicate with a PSAP such as removing a UE from the network slice that is identified as being associated with malicious activity.

In various example, the server enables the UEs, base stations, or other network entities to transmit fewer messages using less data (e.g., by monitoring and removing malicious activity associated with the network slice). By exchanging fewer messages to establish a communication session, additional bandwidth is available on the 5G network (e.g., for authorized or unauthorized emergency calls). Further, using the techniques described herein can improve transmission of message data from a UE using a telecommunications network by reducing latency through use of a network slice specific for unauthorized UEs. Further description of network slicing techniques by the server can be found throughout this disclosure including in the figures below.

Though some examples are described in relation to a server, in various examples one or more computing devices, networks, or other entities may perform or otherwise be associated with the techniques described herein.

In addition, the techniques described herein can improve a telecommunications network by detecting malicious incidents that can affect operation of network elements and taking an action to remedy such malicious incidents. The techniques can include altering settings of network elements as needed prior to and during an malicious incident to provide communication channels to a greatest number of UEs.

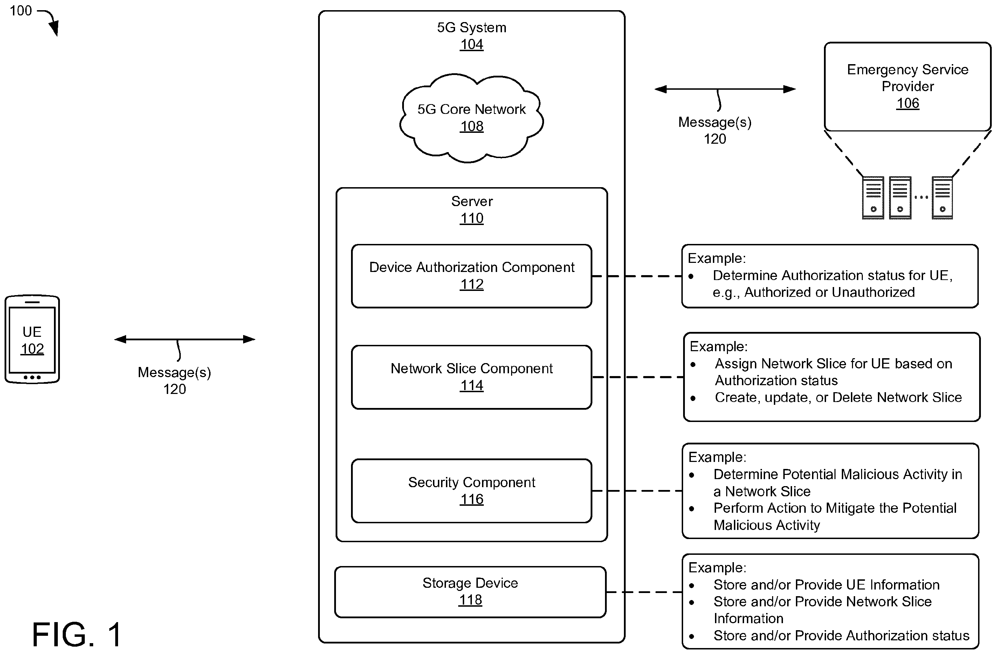

FIG. 1 depicts an example network environment 100 in which an example user equipment (UE) can connect to a telecommunications system that includes an example server to implement the techniques described herein. For example, a UE 102 (e.g., an unauthorized UE) can connect to a 5G system 104 to exchange data with an emergency service provider 106 (e.g., a Public Agency such as Fire, Police, Medical, and so on). In various examples, a server 110 of the 5G system 104 can determine a network slice for the UE 102 to exchange data associated with an emergency in an environment. Though the telecommunications system is depicted in FIG. 1 as the 5G system 104, a system other than the 5G system can be used in various examples (e.g., past or future generation systems). FIG. 1depicts the UE 102 and the emergency service provider 106 as separate entities from the 5G system 104 for illustrative purposes as it is understood that the UE 102 and/or the emergency service provider 106 can exchange data with the 5G system 104 and are therefore associated with, or otherwise part of, the 5G system 104.

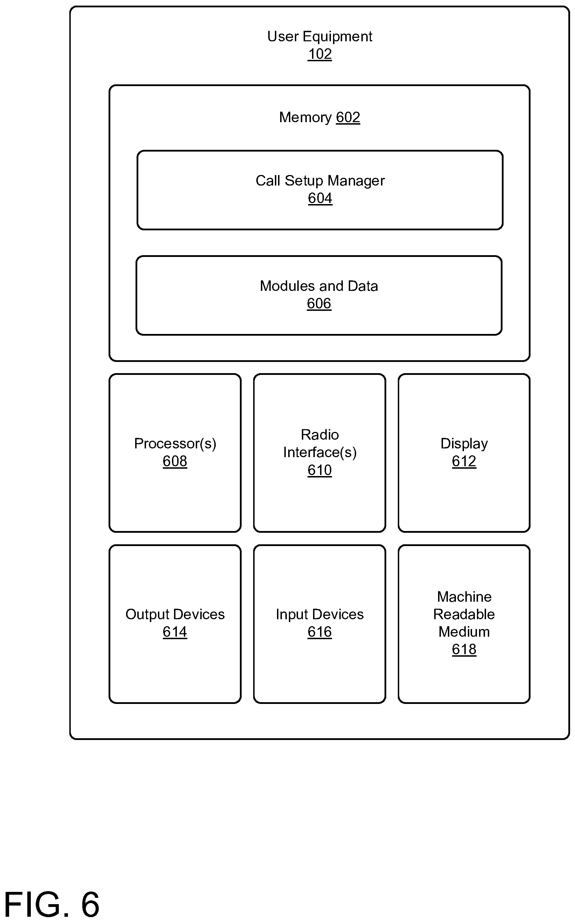

The UE 102 may represent any device that can wirelessly connect to the telecommunication network, and in some examples may include a mobile phone such as a smart phone or other cellular phone, a personal digital assistant (PDA), a personal computer (PC) such as a laptop, desktop, or workstation, a media player, a tablet, a gaming device, a smart watch, a hotspot, a Machine to Machine device (M2M), a vehicle, an unmanned aerial vehicle (UAV), an Internet of Things (IoT) device, or any other type of computing or communication device. An example architecture for the UE 102 is illustrated in greater detail in FIG. 6.

As depicted in FIG. 1, the 5G system 104 comprises the server 110 and a 5G core network 108 to determine one or more network slices usable for a communication session between the UE 102 and the emergency service provider 106 (or device associated therewith). Generally, the server 110 can represent a computing device, an Access and Mobility Management Function (AMF), an IP Multimedia Subsystem (IMS), or other component associated with the 5G system 104. F FIG. 1 further depicts the server 110 comprising a device authorization component 112, a network slice component 114, and a security component 116 as well as a storage device 118. For example, the various components of the server 110 may exchange data with the storage device 118 to implement the network slicing techniques described herein. The storage device 118 can represent, for example, a Unified Data Management (UDM) to manage user data and/or an Authentication Server Function (AUSF) to manage authorization for the UE 102 (e.g., in the 5G system shown). However, in examples when the core network is a different type, such as 4G, the storage device 118 can represent a Home Subscriber Server (HSS). Thus, the storage device 118 can represent various subscription management entities depending upon the example core network used to employ the techniques.

The UE 102 can send and/or receive one or more messages 120 (also referred to herein as "the message 120") to exchange data with the 5G system 104 and the emergency service provider 106. In some examples, the UE 102 can generate a message 120 (e.g., voice, text, and/or video) that includes a connection request to the emergency service provider 106. In some examples, the message 120 from the UE 102 can request a communication session to an emergency service provider while the UE 102 is roaming (e.g., a device operating outside an area served by a telecommunication service provider with which the device is registered), unable to receive a call, lacking a service contract with the 5G system 104, or is otherwise unauthorized to exchange data over the 5G core network 108.

The device authorization component 112 can, for example, represent functionality to validate, authorize, verify or otherwise determine an identity of the UE 102. In some examples, the device authorization component 112 can determine an authorization status (e.g., authorized or unauthorized) for the UE 102 indicating whether or not the UE 102 is an authorized to access the 5G core network 108. The authorization status can be based at least in part on information from a network element associated with the 5G core network 108 (e.g., a base station, etc.) that detects the UE 102 independent of the UE 102 sending a message to the server 110. The authorization status of the UE 102 may also or instead be determined based at least in part on message data associated with the message 120 from the UE 102. For example, the UE 102 can send the message 120 to the 5G core network 108, and the server 110 can detect a device identifier of the UE 102 based on information in the message 120. In some examples, the message 120 represents a response from the emergency service provider 106 to the UE 102 for transmission over the network slice.

The device authorization component 112 can, for example, intercept the message 120 (e.g., a call setup message) and extract or otherwise determine device information associated with the UE 102. For example, the device authorization component 112 can identify a P-Access-Network-Information (PANI), an International Mobile Equipment Identity (IMEI), or other device identifier, associated with the UE 102 usable to identify the UE 102. In various examples, the device authorization component 112 can determine an authorized status or an unauthorized status based on comparing the device identifier to a list, table, or other data indicative of allowable devices. In some examples, the device information can include a Subscription Permanent Identifier (SUPI) (e.g., in a 5G system), an International Mobile Subscriber Identity (IMSI) (e.g., in a 4G system), or the like usable to capture, document, and/or identify a UE.

The network slice component 114 can include functionality to generate, delete, assign, select, or determine one or more network slices usable by a UE (e.g., the UE 102) for exchanging data with the 5G core network 108. For example, the network slice component 114 can generate, configure, or determine network slices for different UEs based on device information for each UE and the authorization status from the device authorization component 112. A network slice can, for instance, represent an independent communication channel from the UE 102 to one of: another UE, a server providing an application to the UE, a PSAP, an emergency service provider, and the like.

In some examples, the network slice component 114 can generate network slices to provide emergency services over a first slice for unauthorized UEs and a second slice for authorized UEs. The first slice and the second slice can be configured to provide a threshold number of UEs the emergency services while also meeting requirements (e.g., laws, rules, regulations, etc.) for a geographic region. The configuration of a network slice can depend on a number of criteria including but not limited to one or more of: capacity and/or bandwidth of a network element between the UE and the PSAP, capacity and/or bandwidth of the PSAP (e.g., a number of available communication channels, serving area, etc.), a total number of available network slices, etc.).

In various examples, the network slice component 114 can transmit or identify the network slice(s) available to the UE 102 over the 5G core network 108 to cause the UE 102 to access a network slice of the set of network slices to provide a communication session. For example, depending upon a location of the UE and/or the device information associated with the UE, the network slice component 114 can generate an instruction for sending to the UE that includes data representing a network slice. For example, the server 110 can send network slice information to the UE 102 that comprises an identifier of the network slice determined by the network slice component 114 which is then available to the UE 102 prior to a message being received from the UE 102. Thus, the UE 102 can exchange data using the network slice without being aware that the 5G core network 108 is configured to provide the network slice (e.g., the network slice information can be provided as an initial configuration by a manufacturer of the UE, sent to the UE prior to receiving a request from the UE, sent in response to a request for a network slice, etc.).

In some examples, the server 110 can represent an AMF that is further configured to provide a control plane and/or a user plane to UEs that are unauthorized to receive services from the 5G system 104. For example, the server 110 can include an AMF that maintains emergency service to a respective UE regardless of an authorization status of the UE.

The security component 116 represents functionality to determine malicious activity in a network slice over time including before, during, and after an unauthorized UE exchanges data over the network slice. For instance, the security component 116 can monitor activity (e.g., one or more data exchanges) in a network slice and identify UE behavior representing a malicious act by a threat actor. In some examples, the security component 116 can detect malicious activity associated with the network slice that impacts operation of the network slice and/or a network element associated therewith. The security component 116 can, for instance, determine whether the network slice is impacting operation of another network slice or network element (e.g., causing the network slice or a base station to perform at or near capacity). The network element can represent, for example, a base station, an antennae, a transceiver, a serving node, or a computing device of the 5G core network 108, just to name a few.

In various examples, the security component 116 can initiate an action to remedy the malicious activity such as removing one or more UEs from the network slice, adjusting a setting of a network element, etc. By way of example and not limitation, the security component 116 can perform various techniques to detect changes in UE behavior over time indicative of a UE having malicious intent (e.g., to use bandwidth of the network slice to prevent other UEs from accessing the network slice). In some examples, the server 110 can employ a machine learned model trained to detect anomalous UE behavior (compared to UE behavior labeled as "normal", for example), and output a classification of malicious activity for a particular time or time period based on the detected UE behavior. Further, the server 110 can, for example, employ a machine learned model to determine an action to mitigate the malicious activity.

Actions to remedy the malicious activity employed by the server 110 can vary based on a location and/or severity of the emergency (e.g., an impact area). For instance, the security component 116 can include altering settings of a network element(s) as needed prior to and during the malicious activity to provide communication channels to a greatest number of UEs. By way of example and not limitation, the server 110 can determine presence of a threat actor controlling multiple devices attempting to contact a PSAP from an area in the environment (e.g., a hundred calls from a 1 meter area) and output an indication that the multiple UEs are associated with the threat actor because the area is below a threshold size suitable for the number of devices (and users associated therewith) to occupy. In such examples, the multiple devices can be associated with a threat actor operating a subscriber identity module (SIM) device that simulates the appearance of multiple UEs but are not each associated with a separate user. By using the techniques describes herein, the threat actor can be identified and the "devices" occupying or otherwise using the network slice can be removed to free up the network slice (and network elements) for other UEs.

In various examples, the security component 116 can receive location information associated with multiple UEs using the network slice and determine whether the UEs are within a threshold distance of an emergency event (e.g., whether the UE is in the area of the emergency) and/or whether the UEs are within a threshold distance of one another. For example, a concentration of UEs attempting to make calls for a given area can be considered to identify a location of the emergency and/or whether a high concentration of UEs is indicative of a threat actor.

Generally, the storage device 118 can provide functionality including storing network information (including network slice information, network element information, etc.), device information, user information, and the like. In some examples, the storage device 118 can store, determine, and/or provide UE information associated with the UE 102 for use by a component. For instance, the device authorization component 112 can receive UE information indicating historical activity by the UE 102 over a previous time period for determining an authorization status of the UE. In some examples, the network slice component 114 can receive network slice information associated with a previous time period from the storage device 118 for managing the network slice (e.g., determining capacity, settings, etc. for the network slice).

In various examples, output data from a component of the server 110 can be stored in the storage device 118 for access at a later time. For example, the storage device 118 can receive activity associated with various network slices for storage and make such data available to a component for processing at a later time (e.g., to determine whether UE behavior is "normal" or "anomalous").

In various examples, the server 110 can provide the network slice information to the UE 102 based on data received from the storage device 118, the base station, a third-party, the device authorization component 112, the network slice component 114, and/or the security component 116. In various examples, the network slice information can include security information, bandwidth information, and/or latency information for establishing the communication session between the UE and the PSAP.

To implement the techniques described herein, in various examples the 5G system 104 and/or the server 110 can include one or more of: an a proxy call session control function (PCSCF), an interrogating call session control function (ICSCF), a serving call session control function (SCSCF), a serving gateway (SGW), a packet data network gateway (PGW), a policy and charging rules function (PCRF), and an internet protocol short message gateway (IPSM-GW), a short message service center (SMSC), and an evolved packet data gateway (ePDG), and a Home Subscriber Server (HSS), just to name a few. In addition, the techniques described herein may be implemented using Real-Time Protocol (RTP) and/or Real-Time Control Protocol (RTCP), among others.

In various examples, the 5G system 104 can represent functionality to provide a communication channel for the UE 102, and can include one or more radio access networks (RANs), as well as one or more core networks linked to the RANs. For instance, the UE 102 can wirelessly connect to a base station or other access point of a RAN, and in turn be connected to the 5G core network 108. The RANs and/or core networks can be compatible with one or more radio access technologies, wireless access technologies, protocols, and/or standards. For example, wireless and radio access technologies can include fifth generation (5G) technology, Long Term Evolution (LTE)/LTE Advanced technology, other fourth generation (4G) technology, third generation (3G) technology, High-Speed Data Packet Access (HSDPA)/Evolved High-Speed Packet Access (HSPA+) technology, Universal Mobile Telecommunications System (UMTS) technology, Global System for Mobile Communications (GSM) technology, WiFi technology, and/or any other previous or future generation of radio access technology. In this way, the 5G system 104 is compatible to operate with other radio technologies including those of other service providers. Accordingly, the message(s) 120 from the UE 102 may originate with another service provider (e.g., a third-party) and be processed by an IMS independent of the technolog(ies) or core network associated with the service provider.

While shown separately in FIG. 1, the device authorization component 112, the network slice component 114, and the security component 116 (and the functionality thereof) can be included in a single component of the server 110 and/or in another computing device (e.g., the UE 102 or another device associated with the 5G system 104).

In various examples, the server 110 (or component thereof) can implement one or more models to implement the techniques discussed herein. As described herein, models may be representative of machine learned models, non-machine learning models, or a combination thereof. That is, a model may refer to a machine learning model that learns from a training data set to improve accuracy of an output (e.g., a prediction). Additionally or alternatively, a model may represent logic and/or mathematical functions that generate approximations which are usable to make predictions.

Training data may include a wide variety of data, such as image data, video data, audio data, network activity data, sensor data, etc., that is associated with a value (e.g., a desired classification, inference, prediction, etc.). Such values may generally be referred to as a "ground truth." To illustrate, the training data may be used for determining UE behavior over time and, as such, may include behavior associated with historical network activity and that is associated with one or more classifications (e.g., is an incident present, yes or no). In some examples, such a classification may be based on user input (e.g., user input indicating that the image depicts a specific type of incident) and/or may be based on the output of another machine learned model. In some examples, such labeled classifications (or more generally, the labeled output associated with training data) may be referred to as ground truth.

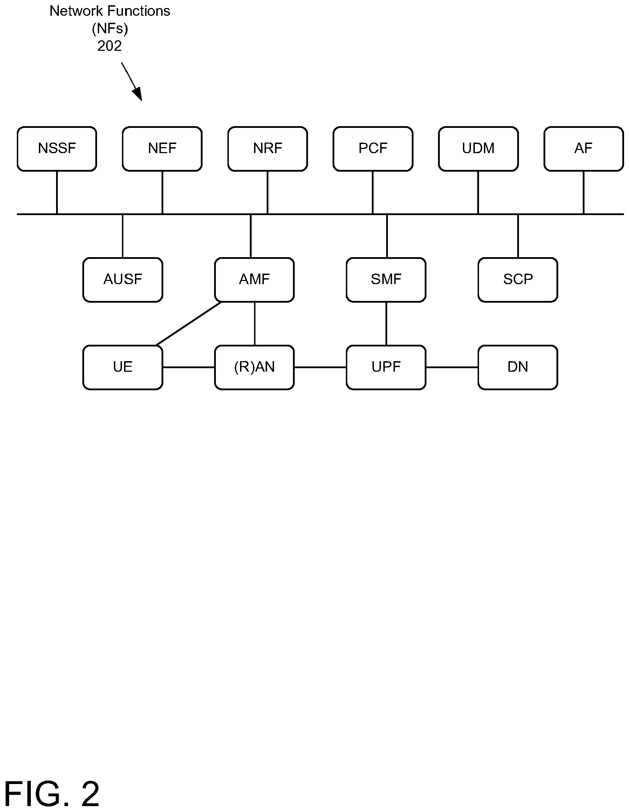

In some examples, the 5G core network 108 can represent a service-based architecture that includes multiple types of network functions that process control plane data and/or user plane data to implement services for the UE 102. In some examples, the services comprise rich communication services (RCS), a VoNR service, a ViNR service, and the like which may include a text, a data file transfer, an image, a video, or a combination thereof. The network functions of the 5G core network 108 can include an Access and Mobility Management Function (AMF), a Session Management Function (SMF), a User Plane Function (UPF), a Policy Control Function (PCF), and/or other network functions implemented in software and/or hardware, just to name a few. Examples of network functions are also discussed in relation to FIG. 2, and elsewhere.

FIG. 2 depicts an example system architecture for a fifth generation (5G) telecommunication network. In some examples, the telecommunication network can comprise the 5G core network 108 in FIG. 1 that includes a service-based system architecture in which different types of network functions (NFs) 202 operate alone and/or together to implement services. Standards for 5G communications define many types of NFs 202 that can be present in 5G telecommunication networks (e.g., the 5G core network 108), including but not limited to an Authentication Server Function (AUSF), Access and Mobility Management Function (AMF), Data Network (DN), Unstructured Data Storage Function (UDSF), Network Exposure Function (NEF), Network Repository Function (NRF), Network Slice Selection Function (NSSF), Policy Control Function (PCF), Session Management Function (SMF), Unified Data Management (UDM), Unified Data Repository (UDR), User Plane Function (UPF), Application Function (AF), User Equipment (UE), (Radio) Access Network ((R)AN), 5G-Equipment Identity Register (5G-EIR), Network Data Analytics Function (NWDAF), Charging Function (CHF), Service Communication Proxy (SCP), Security Edge Protection Proxy (SEPP), Non-3GPP InterWorking Function (N3IWF), Trusted Non-3GPP Gateway Function (TNGF), and Wireline Access Gateway Function (W-AGF), many of which are shown in the example system architecture of FIG. 2.

One or more of the NFs 202 of the 5G core network 108 can be implemented as network applications that execute within containers (not shown). The NFs 202 can execute as hardware elements, software elements, and/or combinations of the two within telecommunication network(s), and accordingly many types of the NFs 202 can be implemented as software and/or as virtualized functions that execute on cloud servers or other computing devices. Network applications that can execute within containers can also include any other type of network function, application, entity, module, element, or node.

The 5G core network 108 can, in some examples, determine a connection between an IMS that manages a communication session for the UE 102, including sessions for short messaging, voice calls, video calls, and/or other types of communications. For example, the UE 102 and the IMS of the 5G system 104 can exchange Session Initiation Protocol (SIP) messages to set up and manage individual communication sessions. In some examples, the IMS of the 5G system 104 can generate a network slice to act as a communication channel for a voice communication, video communication, or other communication between the UE 102 and another computing device of a PSAP, emergency service provider, or the like.

Though some examples in FIG. 1 and elsewhere are described in association with a 5G telecommunication system, the techniques described herein can be used in other telecommunication system types include past generation and/or future generation telecommunication systems.

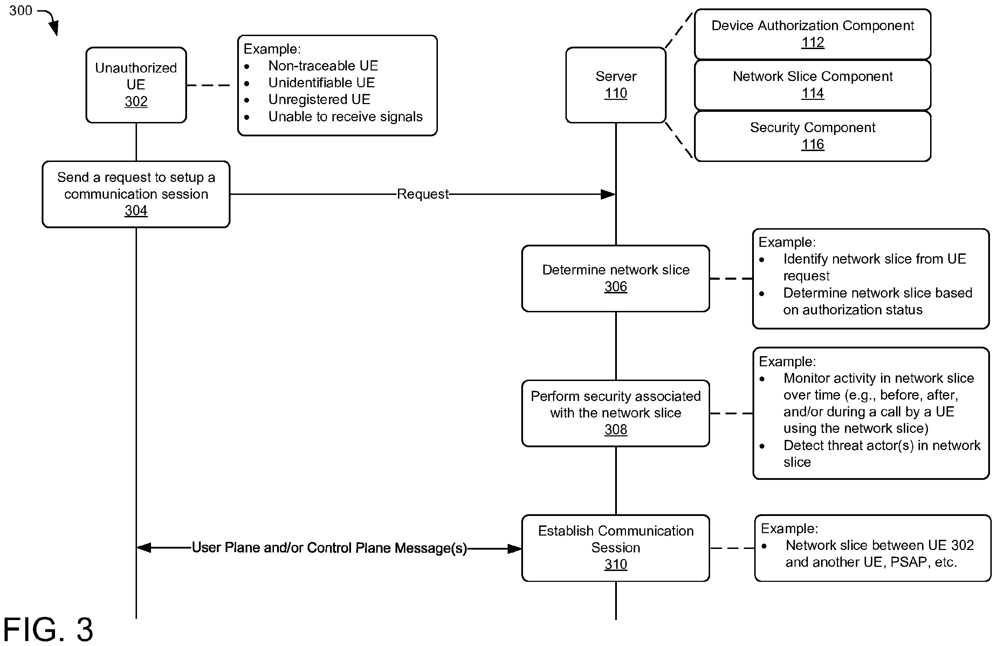

FIG. 3 depicts a messaging flow for establishing a communication session through an example server in an example telecommunication system. For example, an unauthorized UE 302 (also referred to herein as the "UE 302") may exchange (e.g., send and/or receive) one or more messages with the server 110 of FIG. 1(e.g., the device authorization component 112, the network slice component 114, and/or the security component 116) to establish a communication session with another UE (of a PSAP, for example). In some examples, the device authorization component 112, the network slice component 114, and/or the security component 116 can be included in an AMF or other component, computing device, or entity of the 5G system 104 that is configured to determine a communication session for the UE 102.

The unauthorized UE 302 can be untraceable, unidentifiable, unlocatable, or otherwise not associated with a mobile network operator (MNO). For example, the unauthorized UE 302 could be a mobile device that is roaming on the 5G core network 108 and the server 110 can be employed to direct or assign the unauthorized UE 302 to a network slice. In some examples, the unauthorized UE 302 can be a modem-less device (e.g., an IoT, a sensor in a vicinity of an emergency event)

At 304, the unauthorized UE 302 can send a request to setup a communication session over the 5G core network 108 to the server 110 of the 5G system 104. For example, the UE 302 can send a call setup message, a test message, or other message usable to connect the UE 302 to an emergency provider (e.g., the emergency service provider 106). The call setup instruction can include, for example, a message (e.g., the message 120) requesting a communication channel from an IMS, an AMF, or other entity of the 5G system 104. In examples that the unauthorized UE 302 represents a modem-less device, the request can include information about an emergency in a vicinity of the unauthorized UE 302. In some examples, the UE 302 may include the functionality associated with the UE 102 of FIG. 1.

At 306, the server 110 can determine a network slice usable by the unauthorized UE 302 to send and/or receive data associated with the emergency event. For instance, the server 110 can assign the unauthorized UE 302 to a network slice determined by the network slice component 114 based on receiving the request. In some examples, the server 110 can parse the request to identify the network slice, and facilitate associating the UE 302 with the network slice. That is, the server 110 can identify a network slice requested by the unauthorized UE 302.

In various examples, the server 110 can send network slice information to the unauthorized UE 302 at a previous time to cause the unauthorized UE 302 to request a particular networks slice. In other examples, the server 110 can determine a network slice for the unauthorized UE 302 dynamically based on an authorization status associated with the unauthorized UE 302. The device authorization component 112 can, for example, output, access, or determine an authorization status for the unauthorized UE 302 independent of the unauthorized UE 302 sending a request to the server 110 (e.g., a network element can detect presence of the unauthorized UE 302 to cause the server 110 to initiate determining a network slice).

In various examples, the network slice can be determined based on a location of the unauthorized UE 302 relative to a network element (e.g., a base station, an antennae, a transceiver, a serving node, a computing device, etc.) of the 5G core network 108.

At 308, the server 110 can perform security associated with the network slice. For example, the server 110 can monitor the network slice associated with the unauthorized UE 302 over time including before, after, and/or during an exchange of data between the unauthorized UE 302 and the emergency service provider 106 over the network slice. In various examples, the security component 116 can detect a threat actor operating, or attempting to operate, in the network slice as the unauthorized UE 302.

At 310, the server 110 can establish the communication session by exchanging a user plane message (s) and/or a control plane message(s) with the server 110 (or another component of the 5G core network 108). For instance, the 5G core network 108 can process control plane data and/or user plane data to assign the unauthorized UE 302 to the network slice. In some examples, the server 110 can provide a control plane and/or a user plane between the UE 302 and a PSAP after determining that the UE 302 is associated with an unauthorized status.

Though the device authorization component 112, the network slice component 114, and the security component 116 are illustrated in FIG. 3 individually, it is understood that the device authorization component 112, the network slice component 114, and/or the security component 116 (or functionality provided therefrom) may be directly coupled to and/or integrated into an AMF, IMS, or other entity of the 5G system 104. Further, though described in relation to the 5G system 104, the network slicing techniques can be used in other telecommunications systems other than those using a 5G architecture. In some examples, functionality associated with the device authorization component 112, the network slice component 114, and/or the security component 116 may be directly coupled to and/or integrated into the UE 102 of FIG. 1or the UE 302 of FIG. 3.

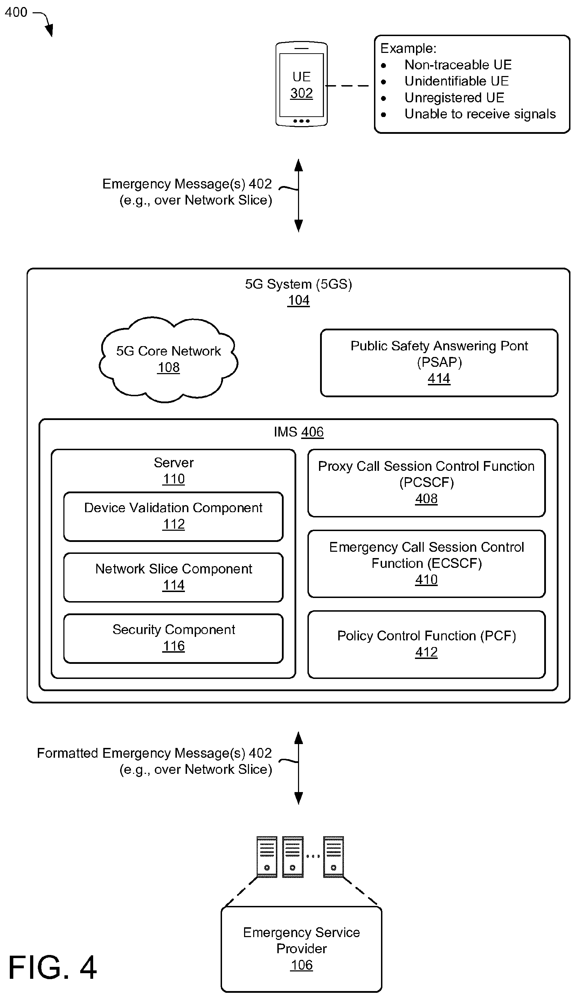

FIG. 4 depicts another example network environment in which a user equipment can connect to a telecommunication network to implement the techniques described herein. As illustrated in FIG. 4, the UE 302 can communicate (e.g., send and/or receive) one or more emergency message(s) 402 to the 5G system 104 which can modify, configure, adjust, augment, or otherwise format the emergency message 402 as a formatted emergency message 404 for sending to the emergency service center 106.

As shown in FIG. 4, the 5G system 104 comprises an IMS 406, which comprises a proxy call session control function (PCSCF) 408 and an emergency call session control function (ECSCF) 410, and a Policy Control Function (PCF) 412. The 5G system 104 also comprises a public safety answering point (PSAP) 414.

In some examples, the emergency message 402 can represent a communication request from the UE 302 to exchange data with an emergency service provider 106 via the PSAP 414. For instance, the emergency message 402 can include text, a video, an image, or a file related to an emergency event for sending to the emergency service center 106. The formatted emergency message 404 can represent a modification made to the emergency message 402 for compatibility with the PSAP 414 (e.g., augment the message by determining a protocol for the formatted emergency message 404 that is recognizable by the PSAP 414 (e.g., convert a protocol associated with the emergency message 402 to another protocol compatible with the PSAP 414).

Generally, the IMS 406 can format the emergency message 402 received from the UE 302 by the PCSCF 408 for sending to the emergency service center 106 based at least in part on data associated with the emergency message 402. For instance, the emergency message 402 may comprise a video of an emergency event, and the IMS 406 may determine the formatted emergency message 404, and initiate sending of the formatted emergency message to the emergency service center 106 by way of the PCSCF 408, the ECSCF 410, the PCF 412 and/or the PSAP 414.

The PCSCF 308 can represent functionality of a proxy server that receives data from the UE 302 at the IMS 306. That is, the PCSCF 308 can establish and maintain communications between one or more UEs (including UEs of third-parties having unique communication requirements) and various answering points.

In some examples, the ECSCF 310 can implement functionality to configure the emergency message 402 for sending between the PSAP 414 and the IMS 406 for delivery to the emergency service center 106. For instance, the ECSCF 410 can retrieve location information (if available) and/or communicate data with the server 110 (e.g., data associated with the emergency message 402 and/or the formatted emergency message 404). Additionally or alternatively, the IMS 406 can determine a protocol usable by the ECSCF 410 for communicating the formatted emergency message 404 to the emergency service center 106. In this way, the emergency service center 106 can provide emergency services related to the emergency event associated with the UE 302 based at least in part on the network slice.

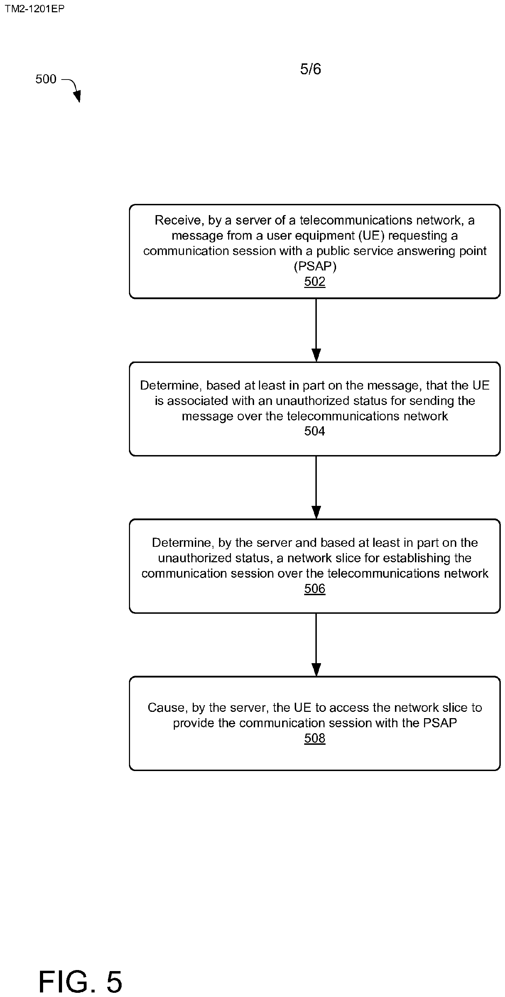

FIG. 5 depicts a flowchart of an example process 500 for determining a network slice for an example user equipment. Some or all of the process 500 may be performed by one or more components in FIGS. 1-4, as described herein. For example, some or all of process 500 may be performed by the server 110 of FIG. 1.

At operation 502, the process may include receiving, by a server of a telecommunications network, a message from a user equipment (UE) requesting a communication session with a public service answering point (PSAP). In some examples, the operation 502 may include the server 110 receiving message data from the UE (e.g., the UE 102 or the UE 302) indicating that the UE initiated a communication to an identifier (e.g., a phone number such as 911) associated with an emergency service provider. The server 110 may, for instance, receive a message (e.g., the message 120 or the emergency message 402) requesting to establish a voice, video, and/or text communication session that enables the UE to receive an emergency service using a network slice over the 5G telecommunications network (e.g., the 5G core network 108).

At operation 504, the process may include determining, based at least in part on the message, that the UE is associated with an unauthorized status for sending the message over the telecommunications network. For instance, the server 110 can extract, identify, or otherwise determine an INMI, or other device identifier, associated with the message received from the UE. Based on the device identifier, the server 110 can output a first classification of "authorized" or a second classification as "unauthorized". In some examples, the server 110 can determine that the UE is "unauthorized" based on the UE requesting to use a network slice that is dedicated for unauthorized UEs, not registering the device with a service operator, and so on.

In some examples, the server 110 can determine that the UE is "unauthorized" based on the message not including a location and/or a contact number for the UE (e.g., for an emergency service provider to contact the UE if needed). The UE may also or instead be determined as an unauthorized UE depending upon a device type, capability, or features of the UE. For instance, a UE lacking a modem or an ability to receive data from the server 110, a PSAP, and/or another device can be considered unauthorized in various examples. Additionally, or alternatively, a device type such as an IoT or a sensor that lacks capabilities, hardware, software, or the like, to receive data from another device but can, nonetheless provide data describing an emergency to the emergency service provider 106.

At operation 506, the process may include determining, by the server and based at least in part on the unauthorized status, a network slice for establishing the communication session over the telecommunications network. In some examples, the operation 506 may include the server 110 determining to assign the UE to a network slice for unauthorized UEs to communicate with devices associated with an emergency service provider. In various examples, the server 110 may select the network slice from among available network slices based on an authorization status of the UE.

In some examples, the operation 506 may include the server 110 sending a request for information to the storage device 118 for historical application data or other user information, device information, and the like identifying application activity by the UE over a previous time period. The data provided by the storage device 118 can be used during operations to determine a network slice specific for the UE, perform security operations, etc.

At operation 508, the process may include causing, by the server, the UE to access the network slice to provide the communication session with the PSAP. In some examples, the operation 508 may include the server 110 determining a user plane and/or a control plane for use with the network slice. The location of the UE may be based at least in part on device information received from a base station associated with the UE at a current time, a base station used by the UE at a previous time, device information from the storage device 118, just to name a few. The UE location may also or instead be determined by a location service or other component of the 5G system 104.

In some examples, the operation 508 can include transmitting data indicating the network slice to the UE over the 5G telecommunications network to cause the UE to access the network slice when initiating a communication session. For example, the network slice component 114 can send network slice information comprising an identifier of the network slice to the UE 102. Based at least in part on transmitting the network slice information, the UE can access the network slice at a later time (and independent of knowing the network slice information was transmitted) to exchange data with a PSAP, for example.

FIG. 6 depicts an example system architecture for the UE 102, in accordance with various examples. As shown, a UE 102 can have memory 602 storing a call setup manager 604, and other modules and data 606. A UE 102 can also comprise processor(s) 608, radio interfaces 610, a display 612, output devices 614, input devices 616, and/or a machine readable medium 618.

In various examples, the memory 602 can include system memory, which may be volatile (such as RAM), non-volatile (such as ROM, flash memory, etc.) or some combination of the two. The memory 602 can further include non-transitory computer-readable media, such as volatile and nonvolatile, removable and non-removable media implemented in any method or technology for storage of information, such as computer readable instructions, data structures, program modules, or other data. System memory, removable storage, and non-removable storage are all examples of non-transitory computer-readable media. Examples of non-transitory computer-readable media include, but are not limited to, RAM, ROM, EEPROM, flash memory or other memory technology, CD-ROM, digital versatile discs (DVD) or other optical storage, magnetic cassettes, magnetic tape, magnetic disk storage or other magnetic storage devices, or any other non-transitory medium which can be used to store desired information and which can be accessed by the UE 102. Any such non-transitory computer-readable media may be part of the UE 102.

The call setup manager 604 can send and/or receive messages comprising a VoNR service, a ViNR service, and/or an RCS service including SIP messages associated with setup and management of a call session via an IMS, an AMF, or the like. The SIP messages can include an SIP INVITE message and/or other SIP messages.

The other modules and data 606 can be utilized by the UE 102 to perform or enable performing any action taken by the UE 102. The modules and data 606 can include a UE platform, operating system, and applications, and data utilized by the platform, operating system, and applications.

In various examples, the processor(s) 608 can be a central processing unit (CPU), a graphics processing unit (GPU), or both CPU and GPU, or any other type of processing unit. Each of the one or more processor(s) 608 may have numerous arithmetic logic units (ALUs) that perform arithmetic and logical operations, as well as one or more control units (CUs) that extract instructions and stored content from processor cache memory, and then executes these instructions by calling on the ALUs, as necessary, during program execution. The processor(s) 608 may also be responsible for executing all computer applications stored in the memory 602, which can be associated with common types of volatile (RAM) and/or nonvolatile (ROM) memory.

The radio interfaces 610 can include transceivers, modems, interfaces, antennas, and/or other components that perform or assist in exchanging radio frequency (RF) communications with base stations of the telecommunication network, a Wi-Fi access point, and/or otherwise implement connections with one or more networks. For example, the radio interfaces 610 can be compatible with multiple radio access technologies, such as 5G radio access technologies and 4G/LTE radio access technologies. Accordingly, the radio interfaces 610 can allow the UE 102 to connect to the 5G system 104 and/or a 4G system as described herein.

The display 612 can be a liquid crystal display or any other type of display commonly used in UEs. For example, display 612 may be a touch-sensitive display screen, and can then also act as an input device or keypad, such as for providing a soft-key keyboard, navigation buttons, or any other type of input. The output devices 614 can include any sort of output devices known in the art, such as the display 612, speakers, a vibrating mechanism, and/or a tactile feedback mechanism. Output devices 614 can also include ports for one or more peripheral devices, such as headphones, peripheral speakers, and/or a peripheral display. The input devices 616 can include any sort of input devices known in the art. For example, input devices 616 can include a microphone, a keyboard/keypad, and/or a touch-sensitive display, such as the touch-sensitive display screen described above. A keyboard/keypad can be a push button numeric dialing pad, a multi-key keyboard, or one or more other types of keys or buttons, and can also include a joystick-like controller, designated navigation buttons, or any other type of input mechanism.

The machine readable medium 618 can store one or more sets of instructions, such as software or firmware, that embodies any one or more of the methodologies or functions described herein. The instructions can also reside, completely or at least partially, within the memory 602, processor(s) 608, and/or radio interface(s) 610 during execution thereof by the UE 102. The memory 602 and the processor(s) 608 also can constitute machine readable media 618.

The various techniques described herein may be implemented in the context of computer-executable instructions or software, such as program modules, that are stored in computer-readable storage and executed by the processor(s) of one or more computing devices such as those illustrated in the figures. Generally, program modules include routines, programs, objects, components, data structures, etc., and define operating logic for performing particular tasks or implement particular abstract data types.

Other architectures may be used to implement the described functionality and are intended to be within the scope of this disclosure. Furthermore, although specific distributions of responsibilities are defined above for purposes of discussion, the various functions and responsibilities might be distributed and divided in different ways, depending on circumstances.

Similarly, software may be stored and distributed in various ways and using different means, and the particular software storage and execution configurations described above may be varied in many different ways. Thus, software implementing the techniques described above may be distributed on various types of computer-readable media, not limited to the forms of memory that are specifically described.

### Conclusion

Although the subj ect matter has been described in language specific to structural features and/or methodological acts, it is to be understood that the subject matter is not necessarily limited to the specific features or acts described above. Rather, the specific features and acts described above are disclosed as example embodiments.

While one or more examples of the techniques described herein have been described, various alterations, additions, permutations and equivalents thereof are included within the scope of the techniques described herein. For instance, techniques described in FIGS. 5 and 6 can be combined in various ways.

In the description of examples, reference is made to the accompanying drawings that form a part hereof, which show by way of illustration specific examples of the claimed subject matter. It is to be understood that other examples can be used and that changes or alterations, such as structural changes, can be made. Such examples, changes or alterations are not necessarily departures from the scope with respect to the intended claimed subject matter. While the steps herein can be presented in a certain order, in some cases the ordering can be changed so that certain inputs are provided at different times or in a different order without changing the function of the systems and methods described. The disclosed procedures could also be executed in different orders. Additionally, various computations that are herein need not be performed in the order disclosed, and other examples using alternative orderings of the computations could be readily implemented. In addition to being reordered, the computations could also be decomposed into sub-computations with the same results.

## Claims

1. A method comprising:
receiving, by a server of a telecommunications network, a message from a user equipment (UE) requesting a communication session with a public service answering point (PSAP);
determining, based at least in part on the message, that the UE is associated with an unauthorized status for sending the message over the telecommunications network;
determining, by the server and based at least in part on the unauthorized status, a network slice for establishing the communication session over the telecommunications network; and
causing, by the server, the UE to access the network slice to provide the communication session with the PSAP.

2. The method of claim 1, further comprising:
monitoring activity by the user equipment over the network slice for a time period; and
detecting presence of potential malicious activity associated with the network slice during the time period.

3. The method of claim 1, wherein:
the telecommunications network comprises a fifth generation (5G) telecommunications network, and
determining that the UE is associated with the unauthorized status comprises determining that the UE is not associated with a Mobile Network Operator.

4. The method of claim 1, further comprising:
determining, by the server, that the message is associated with an emergency event, and
wherein determining the network slice is further based at least in part on determining that the message is associated with the emergency event.

5. The method of claim 1, wherein determining that the UE is associated with the unauthorized status is based at least in part on a P-Access-Network-Information (PANI) or an International Mobile Equipment Identity (IMEI) included in the message.

6. The method of claim 1, wherein the network slice comprises security information, bandwidth information, and latency information for establishing the communication session between the UE and the PSAP.

7. A system comprising:
one or more processors; and
memory storing computer-executable instructions that, when executed by the one or more processors, cause the system to perform operations comprising:
receiving, by a server of a telecommunications network, a message from a user equipment (UE) requesting a communication session with a public service answering point (PSAP);
determining, based at least in part on the message, that the UE is associated with an unauthorized status for sending the message over the telecommunications network;
determining, by the server and based at least in part on the unauthorized status, a network slice for establishing the communication session over the telecommunications network; and
causing, by the server, the UE to access the network slice to provide the communication session with the PSAP.

8. The system of claim 7, the operations further comprising:
monitoring activity by the user equipment over the network slice for a time period;
detecting presence of potential malicious activity associated with the network slice during the time period; and
performing an action to mitigate the potential malicious activity associated with the network slice.

9. The system of claim 7, wherein:
the telecommunications network comprises a fifth generation (5G) telecommunications network, and
determining that the UE is associated with the unauthorized status comprises determining that the UE is not associated with a Mobile Network Operator.

10. The system of claim 7, the operations further comprising:
determining, by the server, that the message is associated with an emergency event, and
wherein determining the network slice is further based at least in part on determining that the message is associated with the emergency event.

11. The system of claim 7, wherein determining that the UE is associated with the unauthorized status is based at least in part on a P-Access-Network-Information (PANI) or an International Mobile Equipment Identity (IMEI) included in the message.

12. The system of claim 7, wherein the network slice comprises security information, bandwidth information, and latency information for establishing the communication session between the UE and the PSAP.

13. The system of claim 7, the operations further comprising causing data to exchange between the UE and the telecommunications network over the network slice.

14. The system of claim 7, the operations further comprising:
determining that the UE is associated with malicious activity over the network slice; and
removing the UE from the network slice based at least in part on determining that the UE is associated with the malicious activity.

15. One or more non-transitory computer-readable media storing instructions executable by one or more processors, wherein the instructions, when executed, cause the one or more processors to perform the method of any one of claims 1 to 6.
